# EUROPEAN PATENT APPLICATION

(11) **EP 4 750 150 A1**
(43) Date of publication of application: **27.05.2026**
(21) Application number: 24848024.6
(22) Date of filing: 16.07.2024
(51) Int. Cl.: H04W 36/00

(54) **INFORMATION TRANSMISSION METHOD AND APPARATUS**

(30) Priority: 31.07.2023 CN 202310958173
(71) Applicant: Huawei Technologies Co., Ltd., Shenzhen, Guangdong 518129 (CN)
(72) Inventor: LI, Jie, Shenzhen, Guangdong 518129 (CN); PENG, Wenjie, Shenzhen, Guangdong 518129 (CN)
(74) Representative: Maiwald GmbH
(86) International application number: PCT/CN2024/105788
(87) International publication number: WO 2025/026065

(57) **Abstract**

This application relates to the field of wireless communication technologies, and provides an information transmission method and an apparatus, to improve a cell handover success rate. In the method, first request information from a first network device is received, where the first request information is used to request information about a first cell; and first response information is sent to the first network device. The first response information includes a coverage area of the first cell and/or first configuration information of a second cell different from the first cell. According to this solution, the coverage area of the first cell and/or configuration information of the second cell through which a movement path of a terminal device may pass may be sent to the first network device. When selecting a conditional handover candidate target cell, the first network device may select a candidate cell that is suitable for the terminal device, to improve a handover success rate.

## Description

### CROSS-REFERENCE TO RELATED APPLICATIONS

This application claims priority to Chinese Patent Application No. 202310958173.3, filed with the China National Intellectual Property Administration on July 31, 2023 and entitled "INFORMATION TRANSMISSION METHOD AND APPARATUS", which is incorporated herein by reference in its entirety.

### TECHNICAL FIELD

This application relates to the field of wireless communication technologies, and in particular, to an information transmission method and an apparatus.

### BACKGROUND

As a new type of aircraft, an uncrewed aerial vehicle (uncrewed aerial vehicle, UAV) is becoming increasingly common nowadays because the uncrewed aerial vehicle is flexible and convenient. In addition, a cellular network can provide the uncrewed aerial vehicle with support for important characteristics such as extensive coverage, high reliability, high security, and continuous mobility, and provide a regulator with regulatory capabilities. A communication environment of the uncrewed aerial vehicle is greatly different from that of a common terminal. The uncrewed aerial vehicle flies above a base station, is connected to the base station through a Uu interface, and mainly performs line of sight (line of sight, LOS) communication. Therefore, the uncrewed aerial vehicle can receive signals from more base stations.

When executing corresponding tasks, for example, performing power network inspection, the uncrewed aerial vehicle may fly along a fixed path. The path may be referred to as a flight path of the uncrewed aerial vehicle. In new radio (new radio, NR), a protocol supports reporting of the flight path of the uncrewed aerial vehicle. The flight path of the uncrewed aerial vehicle may be represented by using planned waypoint information and a corresponding timestamp. A maximum quantity of waypoints in the flight path is 20. In addition, a standard further supports updating of the flight path of the uncrewed aerial vehicle. For example, when the flight path of the uncrewed aerial vehicle changes, the uncrewed aerial vehicle may first send flight path update indication information to the base station, to notify the base station that the flight path is updated. If the base station needs to update the flight path, the base station may send a flight path request message to the uncrewed aerial vehicle, to request the uncrewed aerial vehicle to send the flight path to the base station.

In conventional NR basic handover, due to deterioration of a radio environment between a source base station and a terminal, like an uncrewed aerial vehicle, a measurement report of the terminal may fail to reach the base station, or after the base station receives the measurement report, a handover command sent by the base station to the terminal may fail to reach the base station. Both of the two cases may cause a handover failure.

### SUMMARY

This application provides an information transmission method and an apparatus, to improve a cell handover success rate.

According to a first aspect, an information transmission method is provided. The method may be performed by a network device, or may be performed by a chip/chip system. In the method, first request information is received from a first network device, where the first request information is used to request information about a first cell. First response information is sent to the first network device, where the first response information includes a coverage area of the first cell and/or first configuration information of a second cell different from the first cell.

According to this solution, the coverage area of the first cell and/or configuration information of the second cell through which a movement path of a terminal device may pass may be sent to the first network device. When selecting a conditional handover candidate target cell, the first network device may select a candidate cell that is suitable for the terminal device, to improve a handover success rate.

In a possible implementation of the first aspect, second request information is sent to a third network device, where the second request information is used to request information about a third cell. Second response information is received from the third network device, where the second response information includes a coverage area of the third cell and/or configuration information of a fourth cell, and the coverage area of the third cell and/or first configuration information of the fourth cell are/is sent to the first network device.

According to this solution, cell information may be requested from a neighboring network device or referred to as a next-hop network device, and sent to the first network device. When selecting the conditional handover candidate target cell, the first network device may select a candidate cell that is suitable for the terminal device, to improve the handover success rate.

In a possible implementation of the first aspect, the second response information is generated based on third response information that is sent by a fourth network device and that is received by the third network device, and the third response information is sent based on third request information that is sent by the third network device to the fourth network device and that is used to request information about a fifth cell.

According to this solution, the information transmission method provided in this application is applicable to a multi-hop scenario. A plurality of network devices obtain a coverage area of a cell in a coordinated manner, and send, to the first network device, a cell applicable to conditional handover.

According to a second aspect, an information transmission method is provided. The method may be performed by a network device, or may be performed by a chip/chip system. In the method, first request information is sent to a second network device, where the first request information is used to request information about a first cell. First response information is received from the second network device, where the first response information includes a coverage area of the first cell and/or first configuration information of a second cell different from the first cell.

According to this solution, the coverage area of the first cell and/or configuration information of the second cell through which a movement path of a terminal device may pass may be received from the second network device, to select a candidate cell that is suitable for the terminal device when a candidate target cell for the conditional handover is selected, to improve a handover success rate.

In a possible implementation of the second aspect, second request information is sent to a third network device, where the second request information is used to request information about a third cell, there is one or more third cells, and there is one or more third network devices.

According to this solution, cell information may be requested from a plurality of network devices, or cell information may be traversed, to select a candidate cell that is suitable for the terminal device when a candidate target cell for the conditional handover is selected, to improve the handover success rate.

In a possible implementation of the second aspect, configuration information for conditional handover is sent to the terminal device based on the first response information, where the configuration information includes radio air interface configuration information of a candidate target cell and a handover execution triggering condition. The handover execution triggering condition includes a height threshold of the terminal device.

According to this solution, the handover execution triggering condition including the height threshold is sent to the terminal device. In this way, the terminal device can select the candidate target cell in an order of movement heights, to improve the handover success rate.

In a possible implementation of the second aspect, the handover execution triggering condition further includes one or two of time information of the terminal device and location information of the terminal device. According to this solution, one or two of the time information and the location information may be used to assist the terminal device in performing conditional handover, to improve a handover success rate.

In a possible implementation of the second aspect, the candidate target cell corresponds to a cell priority, and the cell priority represents a priority of selecting a cell when the terminal device performs cell handover. According to this solution, because coverage area areas of different cells may overlap, cell handover is performed based on cell priorities, so that complexity of the terminal device can be reduced.

In the first aspect and a possible implementation of the second aspect, there is one or more second cells, the first configuration information includes a coverage area of the second cell and second configuration information of the second cell, and the second configuration information includes an identifier of the second cell and/or a first message sent to the terminal device.

According to this solution, the second network device may send the second cell suitable for the candidate target cell, to select a candidate target cell that is more suitable for the terminal device when a candidate target cell for the conditional handover is selected.

In the first aspect and a possible implementation of the second aspect, the first message includes a radio resource control (radio resource control, RRC) message that is sent to the terminal device to perform cell handover, and the RRC message includes the identifier of the second cell.

In the first aspect and a possible implementation of the second aspect, the coverage area includes one or two of a height coverage area and a range of a movement path of the terminal device. The height coverage area indicates signal coverage of a cell signal of the first cell in a direction perpendicular to a horizontal plane or the ground.

According to this solution, the height coverage area of the cell is fed back to the first network device, to help determine whether the height coverage area of the first cell is in an ascent range of the terminal device, to accurately determine the candidate target cell.

In the first aspect and a possible implementation of the second aspect, the coverage area is indicated in one or more of the following manners. For example, the indication is performed by using reference point information and distance information. The reference point information indicates a location point or a location range, and the distance information indicates a distance from the location point or the location range. For another example, the indication is performed by using longitude and latitude information. For another example, the coverage area includes a movement path point for entering the coverage area and a movement path point for leaving the coverage area, where the movement path point indicates a location point in a polarized movement path of the terminal device.

According to the foregoing solution, the coverage area of the cell may be indicated in a plurality of manners, so that the first network device determines whether the movement path of the terminal device passes through the coverage area of the cell.

In the first aspect and a possible implementation of the second aspect, the height coverage area is indicated by using height information of a distance from the reference plane. For example, the reference plane may be a sea level or the ground.

In the first aspect and a possible implementation of the second aspect, the first response information further includes first indication information, and the first indication information indicates that the second cell is used for cell handover of the terminal device. According to this solution, the first indication information may indicate that the second cell may be used for cell handover of the terminal device, and the candidate target cell is sent to the first network device.

In the first aspect and a possible implementation of the second aspect, the first indication information is the identifier of the second cell or the first indication information is explicit indication information. The identifier of the cell in this specification may be a cell identity (identity, ID), a cell-radio network temporary identifier (cell-radio network temporary identifier, C-RNTI), or another identifier that can identify a cell.

In the first aspect and a possible implementation of the second aspect, the first request information further includes second indication information, and the second indication information indicates to send the first configuration information of the second cell to the first network device. Optionally, the second indication information is 1-bit indication information. When a value of the second indication information is 1, it indicates that sending the first configuration information to the first network device is allowed. When the value of the second indication information is 0, it indicates that sending the first configuration information to the first network device is not allowed. Alternatively, when a value of the second indication information is 0, it indicates that sending the first configuration information to the first network device is allowed. When the value of the second indication information is 1, it indicates that sending the first configuration information to the first network device is not allowed.

Because a related protocol does not support the second network device in reporting information about another cell to the first network device, according to this solution, the second network device may report, by using the second indication information, information about the cell that is not requested by the first network device.

In the first aspect and a possible implementation of the second aspect, the first response information further includes one or two of a horizontal coverage area of the first cell and load information of the first cell. The horizontal coverage area represents signal coverage of a cell signal of the first cell in a direction parallel to the ground, and the load information includes one or two of load information at a current moment and load information at a historical moment.

According to this solution, the first network device may select a proper cell as a candidate target cell for conditional handover based on one or two of the horizontal coverage area and the load information.

In the first aspect and a possible implementation of the second aspect, there is one or more first cells.

According to a third aspect, a communication apparatus is provided, including a processing unit and a transceiver unit.

The transceiver unit is configured to receive first request information from a first network device, where the first request information is used to request information about a first cell. The processing unit is configured to determine a coverage area of the first cell and/or first configuration information of a second cell different from the first cell. The transceiver unit is further configured to send first response information to the first network device, where the first response information includes the coverage area of the first cell and/or the first configuration information of the second cell different from the first cell.

In a possible implementation of the third aspect, the transceiver unit is further configured to send second request information to a second network device, where the second request information is used to request information about a third cell. The transceiver unit is further configured to receive second response information from the second network device, where the second response information includes a coverage area of the third cell and/or configuration information of a fourth cell; and send the coverage area of the third cell and/or first configuration information of the fourth cell to the first network device.

In a possible implementation of the third aspect, the second response information is generated based on third response information that is sent by a third network device and that is received by the second network device, and the third response information is sent based on third request information that is sent by the second network device to the third network device and that is used to request information about a fifth cell.

According to a fourth aspect, a communication apparatus is provided, including a processing unit and a transceiver unit.

The processing unit is configured to generate first request information, where the first request information is used to request information about a first cell. The transceiver unit is configured to send first request information to a second network device. The transceiver unit is further configured to receive first response information from the second network device, where the first response information includes a coverage area of the first cell and/or first configuration information of a second cell different from the first cell.

In a possible implementation of the fourth aspect, the transceiver unit is further configured to send second request information to a third network device, where the second request information is used to request information about a third cell, there is one or more third cells, and there is one or more third network devices.

In a possible implementation of the fourth aspect, the processing unit is further configured to send configuration information for conditional handover to a terminal device based on the first response information, where the configuration information includes radio air interface configuration information of a candidate target cell and a handover execution triggering condition. The handover execution triggering condition includes a height threshold of the terminal device.

In a possible implementation of the fourth aspect, the handover execution triggering condition further includes one or two of time information of the terminal device and location information of the terminal device.

In a possible implementation of the fourth aspect, the candidate target cell corresponds to a cell priority, and the cell priority represents a priority of selecting a cell when the terminal device performs cell handover.

In the third aspect and a possible implementation of the fourth aspect, there is one or more second cells, the first configuration information includes a coverage area of the second cell and second configuration information of the second cell, and the second configuration information includes an identifier of the second cell and/or a first message sent to the terminal device.

In the third aspect and a possible implementation of the fourth aspect, the first message includes an RRC message sent to the terminal device to perform cell handover, and the RRC message includes the identifier of the second cell.

In the third aspect and a possible implementation of the fourth aspect, the coverage area includes one or two of a height coverage area and a range of a movement path of the terminal device. The height coverage area indicates signal coverage of a cell signal of the first cell in a direction perpendicular to a horizontal plane or the ground.

In the third aspect and a possible implementation of the fourth aspect, the coverage area is indicated in one or more of the following manners: the indication is performed by using reference point information and distance information, where the reference point information indicates a location point or a location range, and the distance information indicates a distance from the location point or the location range; the indication is performed by using longitude and latitude information; or the coverage area includes a movement path point for entering the coverage area and a movement path point for leaving the coverage area, where the movement path point indicates a location point in a polarized movement path of the terminal device.

In the third aspect and a possible implementation of the fourth aspect, the height coverage area is indicated by using height information of a distance from the reference plane.

In the third aspect and a possible implementation of the fourth aspect, the first response information further includes first indication information, and the first indication information indicates that the second cell is used for cell handover of the terminal device.

In the third aspect and a possible implementation of the fourth aspect, the first indication information is the identifier of the second cell or the first indication information is explicit indication information.

In the third aspect and a possible implementation of the fourth aspect, the first request information further includes second indication information, and the second indication information indicates to send the first configuration information of the second cell to the first network device. Optionally, the second indication information is 1-bit indication information. When a value of the second indication information is 1, it indicates that sending the first configuration information to the first network device is allowed. When the value of the second indication information is 0, it indicates that sending the first configuration information to the first network device is not allowed. Alternatively, when a value of the second indication information is 0, it indicates that sending the first configuration information to the first network device is allowed. When the value of the second indication information is 1, it indicates that sending the first configuration information to the first network device is not allowed.

In the third aspect and a possible implementation of the fourth aspect, the first response information further includes one or two of a horizontal coverage area of the first cell and load information of the first cell. The horizontal coverage area represents signal coverage of a cell signal of the first cell in a direction parallel to the ground, and the load information includes one or two of load information at a current moment and load information at a historical moment.

In the third aspect and a possible implementation of the fourth aspect, there is one or more first cells.

According to a fifth aspect, an embodiment of this application provides a communication apparatus. The communication apparatus may be the communication apparatus in any one of the third aspect and the fourth aspect in the foregoing embodiments, or a chip disposed in the communication apparatus in any one of the third aspect and the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus performs the method performed by the network device in the method embodiments in any one of the first aspect and the second aspect.

It should be understood that the communication interface may be implemented by using an antenna, a feeder, a coder/decoder, and the like in the communication apparatus. Alternatively, if the communication apparatus is a chip disposed in a communication device, the communication interface may be an input/output interface of the chip, for example, an input/output pin. The communication apparatus may further include a transceiver, used by the communication apparatus to communicate with another device.

According to a sixth aspect, this application provides a communication apparatus, including a logic circuit and an input/output interface. The logic circuit is configured to perform the method performed by the network device in any of possible implementations of the first aspect and the second aspect. The input/output interface is configured to communicate with another communication apparatus.

According to a seventh aspect, an embodiment of this application provides a chip system. The chip system includes a processor, and may further include a memory, configured to implement the method performed by the network device in any one of the first aspect and the second aspect. In a possible implementation, the chip system further includes a memory, configured to store program instructions and/or data. The chip system may include a chip, or may include a chip and another discrete component.

According to an eighth aspect, an embodiment of this application provides a communication system, where the communication system includes the network device in any of possible implementations of the first aspect and the network device in any one of possible implementations of the second aspect. Optionally, the communication system further includes a terminal device.

According to a ninth aspect, this application provides a computer-readable storage medium. The computer-readable storage medium stores a computer program or instructions, and when the computer program or instructions are run, the methods performed by the network device in the foregoing aspects are implemented.

According to a tenth aspect, a computer program product is provided. The computer program product includes computer program code or instructions. When the computer program code or instructions are run, the method performed by the network device in the foregoing aspects is performed.

According to an eleventh aspect, a communication apparatus is provided. The communication apparatus includes a unit or a module for performing the methods in the foregoing aspects.

For beneficial effects of the third aspect to the eleventh aspect and the implementations thereof, refer to descriptions of the beneficial effects of the method in the first aspect and the second aspect and the implementations thereof.

### BRIEF DESCRIPTION OF DRAWINGS

FIG. 1 is a diagram of a communication system according to an embodiment of this application;
FIG. 2 is a diagram of another communication system according to an embodiment of this application;
FIG. 3 is a diagram of a flight path of an uncrewed aerial vehicle according to an embodiment of this application;
FIG. 4 is a diagram of another communication system according to an embodiment of this application;
FIG. 5 is a schematic flowchart of CHO according to an embodiment of this application;
FIG. 6 is an example flowchart of an information transmission method according to an embodiment of this application;
FIG. 7 is an example flowchart of another information transmission method according to an embodiment of this application;
FIG. 8 is a diagram of a communication apparatus according to an embodiment of this application;
FIG. 9 is a diagram of another communication apparatus according to an embodiment of this application;
FIG. 10 is a diagram of another communication apparatus according to an embodiment of this application; and
FIG. 11 is a diagram of another communication apparatus according to an embodiment of this application.

### DESCRIPTION OF EMBODIMENTS

For ease of understanding of the technical solutions provided in embodiments of this application, the following describes technical terms used in embodiments of this application.
(1) A coverage area is a radiation range of a cell signal.
(2) A height coverage area is signal coverage of a cell signal in a direction perpendicular to a horizontal plane or the ground.
(3) A horizontal coverage area is signal coverage of a cell signal in a direction parallel to the ground.
(4) A movement path is a planned movement path of a terminal device. Optionally, a path along which an uncrewed aerial vehicle flies may be referred to as a flight path.
(5) A movement path point is a location point through which a terminal device passes in a movement process, and a movement path may include a plurality of location points. Optionally, a location point of a flight path of an uncrewed aerial vehicle may be referred to as a waypoint.

The following describes in detail embodiments of this application with reference to the accompanying drawings of the specification.

The technical solutions in embodiments of this application may be applied to a new radio (New Radio, NR) system, a global system for mobile communications (Global System for Mobile communications, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD), a universal mobile telecommunications system (Universal Mobile Telecommunications System, UMTS), a worldwide interoperability for microwave access (Worldwide Interoperability for Microwave Access, WiMAX) communication system, and the like. This is not limited herein.

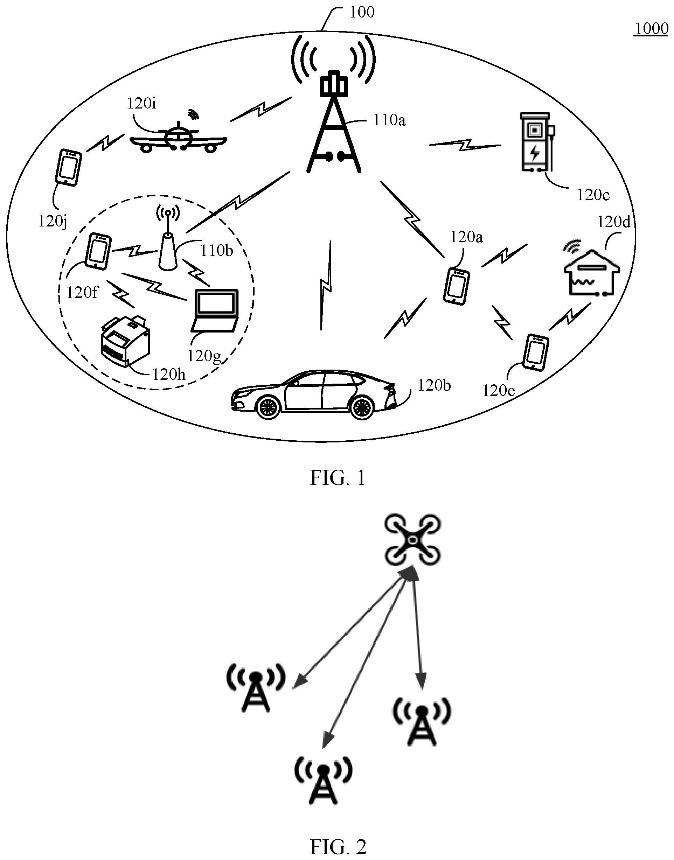

FIG. 1 is a diagram of an architecture of a communication system 1000 to which an embodiment of this application is applied. As shown in FIG. 1, the communication system includes a radio access network 100. The radio access network 100 may include at least one network device (for example, 110a and/or 110b in FIG. 1), and may further include at least one terminal apparatus (for example, at least one of 120a to 120j in FIG. 1). The terminal apparatus is connected to an access network device in a wireless manner, and the access network device is connected to a core network device in a wireless or wired manner. The terminal apparatuses may be connected to each other in a wired or wireless manner, and the network devices may be connected to each other in a wired or wireless manner. FIG. 1 is merely a diagram. The communication system may further include other network devices, for example, may further include a wireless relay device and a wireless backhaul device, which are not shown in FIG. 1.

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to technical specifications related to a 3rd generation partnership project (3rd generation partnership project, 3GPP). The network device may be a macro base station (for example, 110a in FIG. 1), or may be a micro base station or an indoor base station (for example, 110b in FIG. 1), or may be a relay node, a donor node, or the like. A specific technology and a specific device form that are used by the network device are not limited in embodiments of this application. In embodiments of this application, an example in which the network device is a base station is used for description.

In another possible scenario, a plurality of RAN nodes coordinate to assist a terminal in implementing radio access, and different RAN nodes separately implement some functions of a base station. For example, the RAN node may be a CU, a DU, a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. Optionally, in a secure communication method provided in this embodiment of this application, operations of updating a random seed and performing security processing on data may be performed by the RU, and sending and receiving operations may be performed by the DU.

The terminal device is a user-side device having a wireless transceiver function. The terminal device may also be referred to as user equipment (user equipment, UE), a mobile station, a mobile terminal, or the like. The terminal apparatus may be widely used in various scenarios such as device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, smart office, a smart wearable device, smart transportation, and a smart city. The terminal apparatus may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific apparatus form that are used by the terminal apparatus are not limited in embodiments of this application. In embodiments of this application, an example in which the terminal device is a terminal is used for description.

The network device and the terminal device may be fixed at a location, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 through 120i, the terminal device 120i is a network device. However, for the network device 110a, 120i is a terminal device, that is, 110a and 120i communicate with each other by using a radio air interface protocol. Certainly, 110a and 120i may alternatively communicate with each other by using an interface protocol between network devices. In this case, compared with 110a, 120i is also a network device. Therefore, the network device and the terminal device may be collectively referred to as a communication apparatus. 110a and 110b in FIG. 1 may be referred to as a communication apparatus with a function of a network device, and 120a to 120j in FIG. 1 may be referred to as a communication apparatus with a function of a terminal device.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, smart transportation, and smart city. The function of the terminal device may alternatively be performed by a module (for example, a chip or a modem) in the terminal device, or may be performed by an apparatus including a function of the terminal device.

As a new type of aircraft, an uncrewed aerial vehicle (uncrewed aerial vehicle, UAV) is becoming increasingly common nowadays because the uncrewed aerial vehicle is flexible and convenient. In addition, a cellular network can provide the uncrewed aerial vehicle with support for important characteristics such as extensive coverage, high reliability, high security, and continuous mobility, and provide a regulator with regulatory capabilities. A communication environment of the uncrewed aerial vehicle is greatly different from that of a common terminal. The uncrewed aerial vehicle flies above a base station, is connected to the base station through a Uu interface, and mainly performs line of sight (line of sight, LOS) communication. Therefore, the uncrewed aerial vehicle can receive signals from more base stations, as shown in FIG. 2.

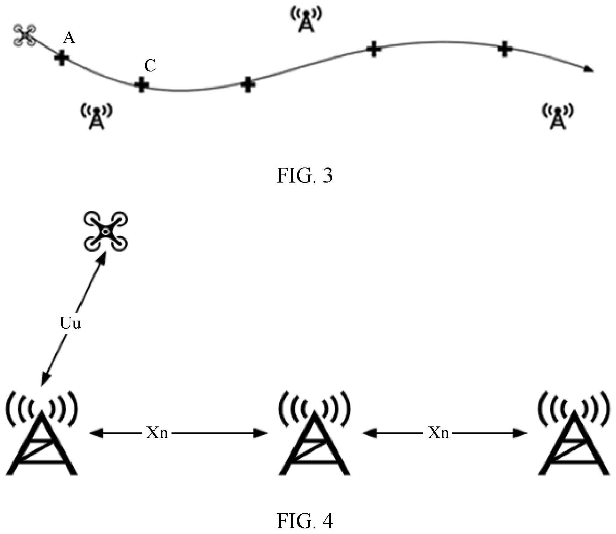

When executing corresponding tasks, for example, performing power network inspection, the uncrewed aerial vehicle may fly along a fixed path. The path may be referred to as a flight path of the uncrewed aerial vehicle, as shown in FIG. 3. In NR, a protocol supports reporting of the flight path of the uncrewed aerial vehicle. The flight path of the uncrewed aerial vehicle may be represented by using planned waypoint information and a corresponding timestamp. A maximum quantity of waypoints in the flight path is 20. In addition, a standard further supports updating of the flight path of the uncrewed aerial vehicle. For example, when the flight path of the uncrewed aerial vehicle changes, the uncrewed aerial vehicle may first send flight path update indication information to the base station, to notify the base station that the flight path is updated. If the base station needs to update the flight path, the base station may send a flight path request message to the uncrewed aerial vehicle, to request the uncrewed aerial vehicle to send the flight path to the base station.

Refer to FIG. 4. In conventional NR basic handover, due to deterioration of a radio environment between a source base station and a terminal, like an uncrewed aerial vehicle, a measurement report of the terminal may fail to reach the base station, or after the base station receives the measurement report, a handover command sent by the base station to the terminal may fail to reach the base station. Both of the two cases may cause a handover failure. In this case, the terminal identifies a radio link failure and initiates an RRC connection reestablishment procedure.

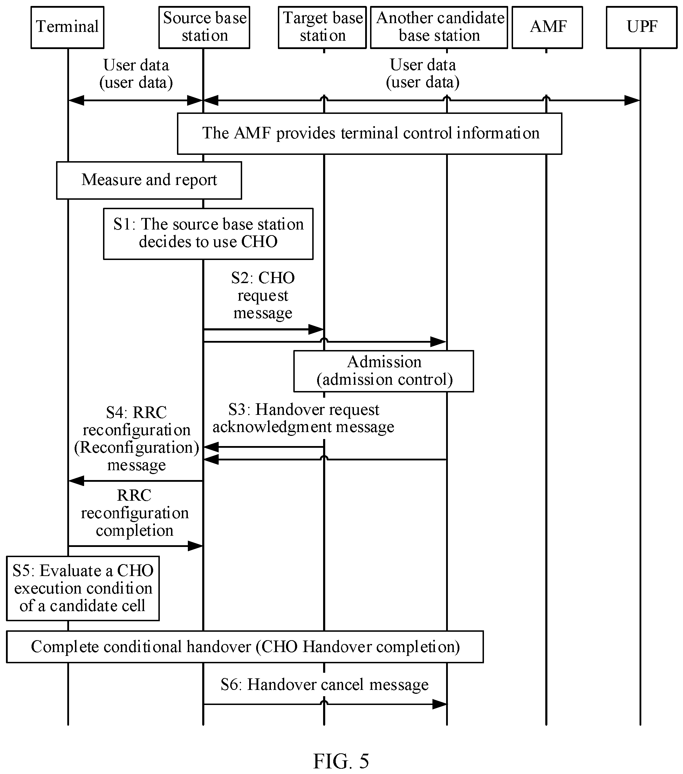

To reduce handover failures caused by the foregoing cases, conditional handover (conditional handover, CHO) is introduced in 3GPP R15. In this way, before a radio environment between a source base station and a terminal like an uncrewed aerial vehicle further deteriorates, the source base station may deliver, to the terminal in advance, a handover command that carries a radio parameter configuration of a candidate target base station and a handover execution triggering condition, so that the terminal knows in advance how to access the target base station. After finding a base station that meets the handover triggering condition in the candidate target base station, the terminal may independently determine to initiate handover execution. This increases a chance of successful message transmission, and greatly improves a success rate of the handover. As shown in FIG. 5, a CHO procedure includes the following operations.

S1: A source base station decides to use CHO.

S2: The source base station sends a CHO request message to one or more candidate base stations.

The source base station may request CHO of one or more candidate cells managed by the one or more candidate base stations, and send, for each candidate cell, the CHO request message to a candidate base station managing the candidate cell.

S3: The candidate base station sends, to the source base station, a handover request acknowledgment message that carries configuration information of the candidate cell.

Each candidate base station may send, to the source base station for a candidate cell managed by the candidate base station, the handover request acknowledgment message that carries the configuration information of the candidate cell, that is, a CHO response message.

S4: The source base station sends an RRC reconfiguration (Reconfiguration) message to a terminal.

The RRC reconfiguration message carries the configuration information of the candidate cell and a CHO execution condition. It may be understood that, the CHO execution condition, namely, a CHO triggering condition may carry a condition for triggering the terminal to perform cell handover, and the terminal may perform cell handover when the condition for triggering is met.

S5: The terminal evaluates the CHO execution condition of the candidate cell.

After receiving the configuration information of the candidate cell and the CHO execution condition, the terminal may maintain a connection to the source base station, and start to evaluate the CHO execution condition of the candidate cell.

If at least one CHO candidate target cell meets a corresponding CHO execution condition, the terminal may detach from the source base station, apply, for the selected candidate cell, the configuration information indicated by the source base station, and synchronizes with the candidate cell. The terminal may send an RRC reconfiguration complete (ReconfiuerationComplete) message to a target base station managing the candidate cell, to complete an RRC handover procedure. After the RRC handover procedure is completed, the terminal releases a stored CHO configuration.

S6: The source base station sends a handover cancel message to another signaling connection or another candidate base station, to cancel CHO of the terminal.

Currently, because coverage of cells is disordered, coverage area of cells at different heights may be completely different. In existing CHO, a height is not considered as a CHO execution condition in an ascent process of an uncrewed aerial vehicle. In addition, a candidate cell selected by the source base station based on a measurement report of the uncrewed aerial vehicle may not be the most suitable one. For example, a flight path of the uncrewed aerial vehicle may not pass through the candidate cell.

In view of this, embodiments of this application provide an information transmission method. In the method, a second base station may receive first request information from a first base station, where the first request information may be used to request information about a first cell. The second base station may send first response information to the first base station. The first response information may include a coverage area of the first cell and/or first configuration information of a second cell different from the first cell. According to this solution, the second base station may send, to the first base station, the coverage area of the first cell or configuration information of the second cell through which a flight path of an uncrewed aerial vehicle may pass. When selecting a CHO candidate target cell, the first base station may select a candidate cell that is suitable for a terminal, to improve a handover success rate.

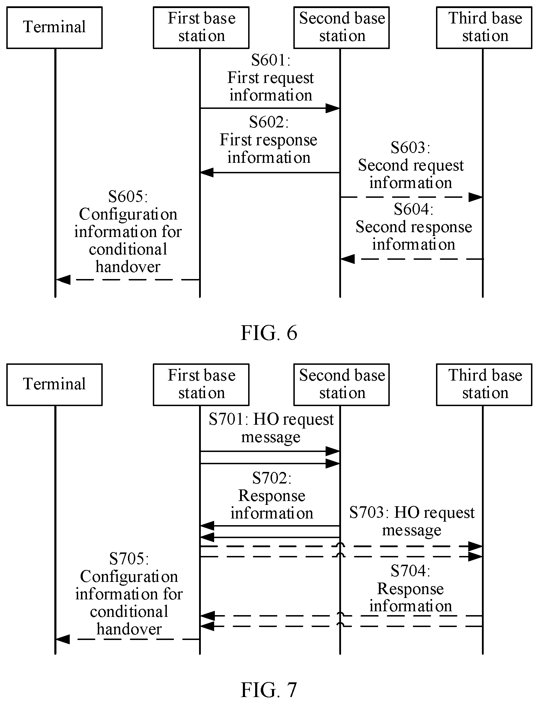

FIG. 6 is an example flowchart of an information transmission method according to an embodiment of this application. The method may include the following operations.

S601: A first base station sends first request information to a second base station.

Correspondingly, the second base station receives the first request information from the first base station.

The first request information may be a handover (handover, HO) request message. The first request information may be used to request information about a first cell. The first cell may be a candidate cell selected by the first base station for a terminal, for example, an uncrewed aerial vehicle. For example, a source base station may select a candidate cell for the terminal based on a measurement report sent by the terminal. A candidate cell managed by the second base station may be referred to as the first cell. Optionally, there may be one or more first cells, and the first base station may send the first request information to the second base station for each first cell.

In a possible case, the first request information may carry location information of the terminal. This help the second base station determine a coverage area of the first cell and/or a coverage area of the second cell at a location point indicated by the location information, for example, a height coverage area. Optionally, when the terminal is in an ascent stage, the first base station may send, to the second base station, the first request information to request a height coverage area of the first cell, or the first request information may include a height range in which the terminal moves. For example, when a height difference for the terminal is greater than or equal to a specific threshold, or a height difference for the terminal exceeds a threshold within a specific time threshold, the terminal may send, to the first base station, information indicating that the terminal is in the ascent stage. In this way, the first base station may request, from the second base station, the height coverage area of the first cell, or send, to the second base station, the height range in which the terminal moves, to help the first base station determine whether the height coverage area of the first cell is in the ascent range of the terminal, to accurately determine a CHO candidate target cell.

S602: The second base station sends first response information to the first base station.

Correspondingly, the first base station receives the first response information from the second base station.

In a possible implementation, the first response information may be an HO request (request) acknowledgment (acknowledgment, ACK). The first response information may include the coverage area of the first cell and/or the first configuration information of the second cell. For example, when the movement path of the terminal passes through the coverage area of the first cell, the second base station may send the coverage area of the first cell to the first base station. For another example, when the movement path passes through the coverage area of the second cell, the second base station may send the first configuration information of the second cell to the first base station. For another example, when the movement path just passes through the coverage area of the first cell and the coverage area of the second cell, the second base station may send the coverage area of the first cell and the first configuration information of the second cell to the first base station.

Optionally, the movement path of the terminal may be received from the first base station. For example, the first base station may receive the movement path from the terminal, and the first base station may send the movement path to the second base station by using the first request information or another message.

Optionally, the first response information may further include an identifier of the first cell and/or an identifier of the second cell. For example, when the first response information includes the coverage area of the first cell, the first response information may further include the identifier of the first cell. For another example, when the first response information includes the first configuration information of the second cell, the first response information may further include the identifier of the second cell. For another example, when the first response information includes the coverage area of the first cell and the first configuration information of the second cell, the first response information may further include the identifier of the first cell and the identifier of the second cell.

In a possible case, the first configuration information may include the coverage area of the second cell and second configuration information of the second cell. It may be understood that the second configuration information may be radio configuration information of the second cell. Optionally, the second configuration information may include the identifier of the second cell and/or a first message sent to the terminal. The identifier of the cell in this specification may be a cell identity (identity, ID), a cell-radio network temporary identifier (cell-radio network temporary identifier, C-RNTI), or another identifier that can identify a cell. This is not specifically limited in this application. The first message may be an RRC message used by the terminal to perform cell handover, and may include the identifier of the second cell. In this embodiment of this application, the radio configuration information may include a cell identifier, a frequency, and the like. The radio configuration information is not specifically limited in this embodiment of this application.

In the foregoing descriptions, the second cell may be understood as a cell that is managed by the second base station and through which the movement path of the terminal passes. In this case, although the second base station does not receive the request information from the first base station for the second cell, the second base station may still send the first configuration information of the second cell to the first base station, to send the CHO candidate target cell for the first base station. Optionally, the first response information may carry first indication information, and the first indication information may indicate that the second cell may be used for cell handover of the terminal, in other words, the first indication information may indicate that the second cell may be used as the CHO candidate target cell. It should be noted that the first indication information may be explicit indication information, or may be implemented by using the identifier of the second cell. This is not specifically limited in this application.

Optionally, the first request information may carry second indication information, indicating that the second base station may send, to the first base station, first configuration information of a cell (for example, the second cell) that does not send request information. For example, the second indication information is 1-bit indication information. When a value of the second indication information is 1, it indicates that sending the first configuration information to the first network device is allowed. When the value of the second indication information is 0, it indicates that sending the first configuration information to the first network device is not allowed. On the contrary, when a value of the second indication information is 0, it indicates that sending the first configuration information to the first network device is allowed. When the value of the second indication information is 1, it indicates that sending the first configuration information to the first network device is not allowed.

It should be noted that the first indication information and the second indication information may be carried in a newly added field, or may be carried by reusing an existing field in the first request information and the first response information. This is not specifically limited in this application.

In an example, the coverage area in this specification may be indicated by using reference point information and distance information. For example, the reference point information indicates a specific location point or location range, and the distance information may indicate a distance from the location point or the location range indicated by the reference point information. For example, the coverage area of the first cell includes the reference point information and a distance D. The reference point information may indicate a location point A by using longitude and latitude information, and the distance information may indicate the distance D from the location point A. In this case, it may be considered that the coverage area of the first cell M starts from the location point A and extends to a range of the distance D from the location point A. For another example, a location of a circle center may be indicated by using the reference point information, and a radius of the circle may be indicated by using the distance information. In this case, the coverage area of the first cell may be considered as a circle whose center is the location point or the location range indicated by the reference point information and whose radius is the distance information.

In another example, the coverage area in this specification may be indicated by using longitude and latitude information. For example, it may be indicated that the coverage area of the cell is an area ranging from longitude A to longitude B and ranging from latitude M to latitude N. For another example, three points of a rectangular area may be indicated by using longitude and latitude information, and in this case, a fourth point of the rectangular area may be determined. In this way, the coverage area of the cell is the rectangular area.

In still another example, the coverage area in this specification may be indicated by using a movement path point of the terminal. For example, the second base station may obtain the movement path of the terminal, and the terminal may indicate the coverage area of the first cell based on the movement path point in the movement path. The movement path point may include a point for entering the coverage area and a point for leaving the coverage area. Refer to FIG. 3. It is assumed that the terminal enters the coverage area of the first cell at a point A, and leaves the coverage area of the first cell at a point C. In this case, the coverage area of the first cell sent by the second base station to the first base station may include the point A and the point C. Optionally, if the movement path point includes only one point, it may be considered that the point for entering the coverage area and the point for leaving the coverage area are the same point.

It should be noted that the foregoing manners of indicating the coverage area are merely shown as examples, and a person skilled in the art may alternatively indicate the coverage area of the cell in another manner.

In S602, the coverage area of the cell may include one or two of the height coverage area of the cell and a range of the movement path of the terminal. In other words, the second base station may indicate, to the first base station, one or two of the height coverage area of the first cell and the range of the movement path of the terminal included in the coverage area of the first cell. For implementation of an indication manner of the height coverage area of the first cell, refer to the foregoing indication manners of the coverage area. For example, the height coverage area may be represented by using a height maximum value (height-max) and a height minimum value (height-min). For another example, the height coverage area may be indicated by using height information of a distance from a reference plane, for example, height information of a distance from a sea level or the ground. The range of the movement path of the terminal may be indicated by using the movement path point of the terminal. For implementation, refer to a manner of indicating the coverage area of the cell by using the movement path point of the terminal. Details are not described herein again.

Optionally, when the first request information carries the height range in which the terminal moves or the first request information requests the height coverage area of the first cell, the first response information may include the height coverage area of the first cell, to help the first base station determine whether the height coverage area of the first cell is in the ascent range of the terminal.

In a possible case, the first response information may further include other assistance information such as a horizontal plane coverage area of the first cell and load information of the first cell. For implementation of the horizontal plane coverage area, refer to the foregoing indication manner of the coverage area. Details are not described herein again. It may be understood that the load information of the first cell may include current load information, historical load information, predicted future load information, or the like. Optionally, the load information may be indicated by using a correspondence between a moment and load information, for example, load information of the first cell at a moment A, and load information of the first cell at a moment B, to help the first base station determine whether the first cell can be used as the CHO candidate target cell. For example, it is assumed that a load of the first cell is excessively high at the moment A, but the movement path of the terminal may pass through coverage area of the first cell at the moment A. The first cell is not suitable for being used as the CHO candidate target cell, and the first base station does not configure the first cell as the CHO candidate target cell for the terminal.

In another possible implementation, the first response information may be a handover preparation failure (HO preparation failure) message. For example, when the movement path does not pass through the coverage area of the first cell, the second base station may send the handover preparation failure (HO preparation failure) message to the first base station. Optionally, the handover preparation failure (HO preparation failure) message may carry the first configuration information of the second cell. For implementation, refer to the foregoing related descriptions. Details are not described herein again.

Optionally, the foregoing solution is applicable to a multi-hop scenario. In the foregoing descriptions, the first base station may be used as a source base station in a CHO configuration process, and the second base station may be used as a target base station in a CHO configuration process. For example, the embodiment shown in FIG. 6 may further include the following operations S603 and S604.

S603: The second base station sends second request information to a third base station.

Correspondingly, the third base station receives the second request information from the second base station. The second request information may be used to request information about a third cell. For implementation, refer to the first request information. Details are not described herein again.

S604: The third base station sends second response information to the second base station.

Correspondingly, the second base station receives the second response information from the third base station. The second response information may include a coverage area of the third cell and/or first configuration information of a fourth cell. For implementation, refer to the first response information. In other words, the third cell may be considered as the first cell, and the fourth cell may be considered as the second cell. Details are not described herein again.

In a multi-hop scenario, the second base station may be equivalent to a source base station, and the third base station may be equivalent to a target base station. After receiving the second response information, the second base station may send content of the second response information to the first base station, for example, the coverage area of the third cell and/or the first configuration information of the fourth cell. Optionally, content of the first response information and the content of the second response information may be sent simultaneously. For example, the content of the second response information may be carried in the first response information, or content of the first response information and the content of the second response information may be sent separately.

Similarly, by analogy, the third base station may send third request information to a fourth base station, and the fourth base station may send third response information to the third base station, so that the first base station can obtain information about as many cells as possible managed by the target base station, to help the first base station determine the CHO candidate target cell. Optionally, when a hop of base station finds that a coverage area of a cell managed by the base station exceeds or approaches an estimated arrival height of the terminal, in other words, when a hop of base station finds that a coverage area of a cell managed by the base station covers a last location point in the movement path, the base station may not send a request message to a next-hop target base station.

Optionally, the embodiment shown in FIG. 6 may further include the following operation S605.

S605: The first base station sends configuration information for conditional handover to the terminal.

Correspondingly, the terminal receives the configuration information for the conditional handover (HO) from the first base station.

In S605, the configuration information for the conditional handover may include air interface configuration information of a candidate target cell and a handover execution triggering condition. The candidate target cell herein may also be referred to as the CHO candidate target cell, and may include the first cell, the second cell, the third cell, the fourth cell, and the like. For example, the candidate target cell may include a cell through which the movement path passes. For another example, the candidate target cell may include a cell through which the movement path passes and that has low load information or has low load information at a moment when the terminal arrives. In other words, the first base station may select the candidate target cell based on the received cell information. It should be noted that a principle of selecting the candidate target cell is not specifically limited in this specification. As described above, the cell through which the movement path passes may be selected, or a cell in which signal quality is higher than a specific threshold may be selected. This is not specifically limited in this specification.

In a possible implementation, the handover execution triggering condition may be understood as a condition that is met when the terminal needs to perform cell handover. The handover execution triggering condition may include one or more of time information, location information, a height threshold, and a cell signal quality threshold of the terminal.

For example, the handover execution triggering condition may include the height threshold and a corresponding candidate target cell (or a candidate target cell list including a plurality of candidate target cells). In other words, the terminal may hand over to the candidate target cell when reaching a height indicated by the height threshold. For example, the terminal may further measure signal quality of the candidate target cell, and select, from the candidate target cell for access, a cell in which signal quality is higher than the quality threshold. How the terminal performs cell handover is not specifically limited in this specification. For a manner in which the terminal performs cell handover, refer to a related 3GPP protocol. It should be noted that there may be one or more height thresholds.

For another example, the handover execution triggering condition may include the time information and a corresponding candidate target cell (or a candidate target cell list including a plurality of candidate target cells). In other words, the terminal may hand over to the candidate target cell at time indicated by the time information. Similarly, there may be one or more pieces of time information.

For another example, the handover execution triggering condition may include the location information and a corresponding candidate target cell (or a candidate target cell list including a plurality of candidate target cells). In other words, the terminal may hand over to the candidate target cell when reaching a location indicated by the location information. Similarly, there may be one or more pieces of location information.

For another example, the handover execution triggering condition may include the cell signal quality threshold and a corresponding candidate target cell (or a candidate target cell list including a plurality of candidate target cells). The terminal may measure signal quality of a candidate cell, and may hand over to the candidate target cell when the signal quality of the candidate cell reaches the cell signal quality threshold.

It should be noted that the height threshold, the time information, the location information, and the cell signal quality threshold may be any two, any three, or four of the height threshold, the time information, the location information, and the cell signal quality threshold, and may be used as the handover execution triggering condition. For example, the handover execution triggering condition may include the height threshold, the time information, and a corresponding candidate target cell (or a candidate target cell list including a plurality of candidate target cells). The terminal may hand over to the candidate target cell when the terminal reaches the height indicated by the height threshold at the time indicated by the time information. For another example, the handover execution triggering condition may include the height threshold, the cell signal quality threshold, and a corresponding candidate target cell (or a candidate target cell list including a plurality of candidate target cells). When the terminal reaches the height indicated by the height threshold, and signal quality of a candidate target cell measured by the terminal reaches a specified cell signal threshold, the terminal may hand over to the candidate target cell.

In a possible case, the first base station may configure a cell priority. For example, coverage area areas of different cells may overlap. If coverage area areas of a plurality of cells overlap, the first base station may configure a cell priority for each candidate target cell. It may be understood that the cell priority may represent a priority of selecting a cell when the terminal performs cell handover. For example, when the handover execution triggering condition is met, the terminal may select, in descending order of cell priorities, a candidate target cell for access.

For example, the handover execution triggering condition includes the height threshold and a plurality of corresponding candidate target cells (or referred to as a candidate target cell list), and a cell priority is correspondingly configured for each candidate target cell. When the terminal reaches the height indicated by the height threshold, the terminal may hand over to a candidate target cell with a highest cell priority. Alternatively, the terminal may measure signal quality of a plurality of candidate target cells, and select a candidate target cell in which signal quality is higher than the threshold and whose cell priority is the highest for access.

The foregoing describes, with reference to FIG. 6, a solution in which the first base station requests the information about the candidate cell and determines the CHO candidate target cell for the terminal. In this embodiment of this application, the first base station may traverse all cells to determine the CHO candidate target cell. Refer to FIG. 7. The following operations may be included.

S701: A first base station sends an HO request message to a second base station.

Correspondingly, the second base station receives the HO request message from the first base station.

In a possible case, the first base station may send a plurality of HO request messages to the second base station. Each candidate cell sends an HO request message, and each HO request message may be used to request information about a corresponding cell. For example, the HO request message may carry a cell identifier, and in this case, the HO request message may be used to request information about a cell corresponding to the cell identifier.

For example, the first base station receives a measurement result from a terminal. The measurement result may include signal quality of each cell. The first base station may send the HO request message for each cell. It is assumed that the measurement result includes a cell A and a cell B that are managed by the second base station, and the first base station may send an HO request message for the cell A and an HO request message for the cell B to the second base station.

S701 may be a possible implementation of S601, and the HO request message may be implemented with reference to the first request information.

S702: The second base station sends response information to the first base station.

Correspondingly, the first base station receives the response information from the second base station. The response information may be an HO request ACK or an HO preparation failure message.

For example, when a coverage area of the cell corresponding to HO request information is on a movement path of the terminal, the response information may be the HO request ACK. Optionally, the response information may carry the coverage area of the corresponding cell. S702 may be a possible implementation of S602, and the response information may be implemented with reference to the first response information. However, the response information in S702 may carry only information related to the corresponding cell, in other words, the response information in S702 may not carry information related to an unrequested cell.

For another example, when the coverage area of the cell corresponding to the HO request information is not on a movement path of the terminal, the response information may be the HO preparation failure message.

Optionally, the embodiment shown in FIG. 7 may further include the following operations S703 and S704.

S703: The first base station sends an HO request message to a third base station.

Correspondingly, the third base station receives the HO request message from the first base station.

The first base station may send the HO request message to the third base station, to request, from the third base station, information about a cell managed by the third base station.

S704: The third base station sends response information to the first base station.

Correspondingly, the first base station receives the response information from the third base station.

S704 may be implemented with reference to S702.

S705: The first base station sends configuration information for conditional handover to the terminal.

Correspondingly, the terminal receives the configuration information for the conditional handover (HO) from the first base station.

S705 may be implemented with reference to S605.

The following describes, with reference to the accompanying drawings, a communication apparatus for implementing the foregoing method in embodiments of this application. Therefore, all the foregoing content may be used in the following embodiments. Repeated content is not described again.

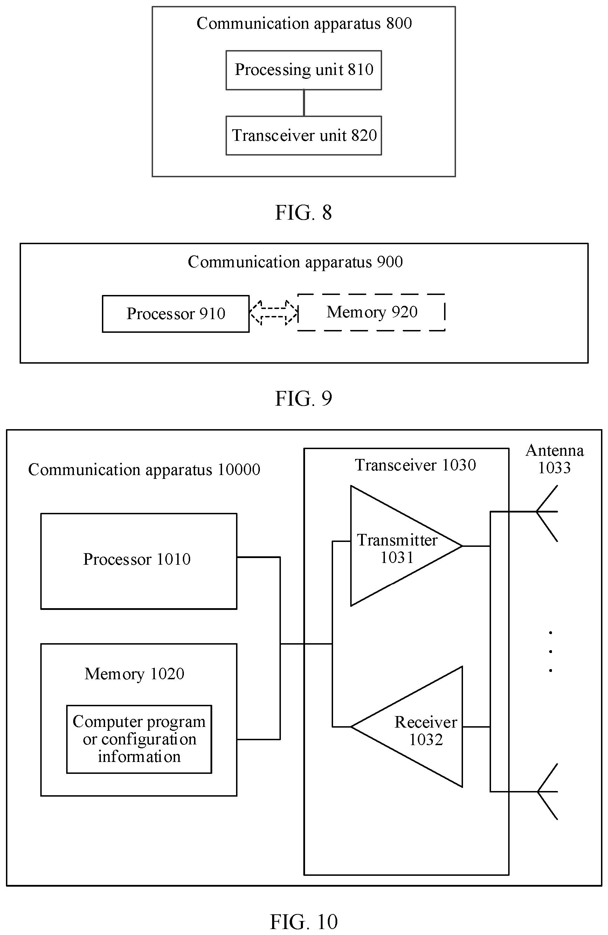

FIG. 8 is a block diagram of a communication apparatus 800 according to an embodiment of this application. The communication apparatus 800 may correspondingly implement a function or a step implemented by the network device in the foregoing method embodiments. The communication apparatus may include a processing unit 810 and a transceiver unit 820. Optionally, a storage unit may be further included. The storage unit may be configured to store instructions (code or a program) and/or data. The processing unit 810 and the transceiver unit 820 may be coupled to the storage unit. For example, the processing unit 810 may read the instructions (the code or the program) and/or the data in the storage unit, to implement a corresponding method. The foregoing units may be independently disposed, or may be partially or completely integrated.

In some possible implementations, the communication apparatus 800 can correspondingly implement a behavior and a function of the first network device in the foregoing method embodiments. For example, the communication apparatus 800 may be the first network device, or may be a component (for example, a chip or a circuit) used in the first network device. The transceiver unit 820 may be configured to perform all receiving and sending operations performed by the first network device in the embodiment shown in FIG. 6 or FIG. 7, for example, S601, S602 and S605 in the embodiment shown in FIG. 6, and/or configured to support another process of the technology described in this specification. The processing unit 810 is configured to perform all operations other than the receiving and sending operations that are performed by the first network device in the embodiment shown in FIG. 6 or FIG. 7.

For example, the transceiver unit 820 is configured to receive first request information from the first network device, where the first request information is used to request information about a first cell. The processing unit 810 is configured to determine a coverage area of the first cell and/or first configuration information of a second cell different from the first cell. The transceiver unit 820 is further configured to send first response information to the first network device, where the first response information includes the coverage area of the first cell and/or the first configuration information of the second cell different from the first cell.

In some possible implementations, the communication apparatus 800 can correspondingly implement a behavior and a function of the second network device in the foregoing method embodiments. For example, the communication apparatus 800 may be the second network device, or may be a component (for example, a chip or a circuit) used in the second network device. The transceiver unit 820 may be configured to perform all receiving and sending operations performed by the second network device in the embodiment shown in FIG. 6 or FIG. 7, for example, S601, S602, S603, and S604 in the embodiment shown in FIG. 6, and/or configured to support another process of the technology described in this specification. The processing unit 810 is configured to perform all operations other than the receiving and sending operations that are performed by the second network device.

For example, the processing unit 810 is configured to generate first request information, where the first request information is used to request information about the first cell. The transceiver unit 820 is configured to send the first request information to a second network device. The transceiver unit 820 is further configured to receive first response information from the second network device, where the first response information includes a coverage area of the first cell and/or first configuration information of a second cell different from the first cell.

For operations performed by the processing unit 810 and the transceiver unit 820, refer to the related descriptions in the foregoing method embodiments.

It should be understood that the processing unit 810 in this embodiment of this application may be implemented by a processor or a processor-related circuit component, and the transceiver unit 820 may be implemented by a transceiver, a transceiver-related circuit component, or a communication interface.

Based on a same concept, as shown in FIG. 9, an embodiment of this application provides a communication apparatus 900. The communication apparatus 900 includes a processor 910. Optionally, the communication apparatus 900 may further include a memory 920, configured to store instructions executed by the processor 910, or store input data required by the processor 910 to run the instructions, or store data generated after the processor 910 runs the instructions. The processor 910 may implement, by using the instructions stored in the memory 920, the method shown in the foregoing method embodiments.

Based on a same concept, as shown in FIG. 10, an embodiment of this application provides a communication apparatus 10000. The communication apparatus 10000 may be a chip or a chip system. Optionally, in this embodiment of this application, the chip system may include a chip, or may include a chip and another discrete device.

The communication apparatus 10000 may include at least one processor 1010. The processor 1010 is coupled to a memory. Optionally, the memory may be located inside the apparatus, or may be located outside the apparatus. For example, the communication apparatus 10000 may further include at least one memory 1020. The memory 1020 stores a necessary computer program, configuration information, a computer program or instructions, and/or data for implementing any one of the foregoing embodiments. The processor 1010 may execute the computer program stored in the memory 1020, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 1010 and the memory 1020 may operate cooperatively. In embodiments of this application, a specific connection medium between the transceiver 1030, the processor 1010, and the memory 1020 is not limited.

The communication apparatus 10000 may further include the transceiver 1030, and the communication apparatus 10000 may exchange information with another device via the transceiver 1030. The transceiver 1030 may be a circuit, a bus, a transceiver, or any other apparatus that can be configured to exchange information, or is referred to as a signal transceiver unit. As shown in FIG. 10, the transceiver 1030 includes a transmitter 1031, a receiver 1032, and an antenna 1033. In addition, when the communication apparatus 10000 is a chip-type apparatus or a circuit, the transceiver in the communication apparatus 10000 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

In a possible implementation, the communication apparatus 10000 may be used in a network device. Specifically, the communication apparatus 10000 may be a network device, or may be an apparatus that can support the network device in implementing functions of the network device in any one of the foregoing embodiments. The memory 1020 stores a necessary computer program, a computer program or instructions, and/or data for implementing functions of the network device in any one of the foregoing embodiments. The processor 1010 may execute the computer program stored in the memory 1020, to implement the method performed by the network device in any one of the foregoing embodiments.

The communication apparatus 10000 provided in this embodiment may be used in the network device to implement the method performed by the network device. Therefore, for technical effects that can be achieved by this embodiment, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of instructions or a data structure and that can be accessed by a computer, but is not limited thereto. The memory in embodiments of this application may alternatively be a circuit or any other apparatus that can implement a storage function, and is configured to store a computer program, a computer program or instructions, and/or data.

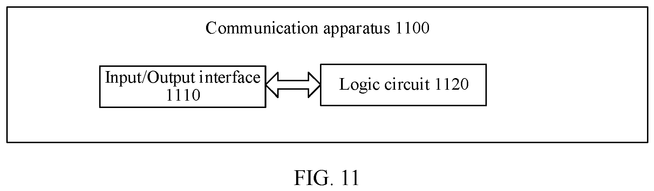

According to the foregoing embodiments, refer to FIG. 11. An embodiment of this application further provides another communication apparatus 1100, including: an input/output interface 1110 and a logic circuit 1120, where the input/output interface 1110 is configured to receive code instructions and transmit the code instructions to the logic circuit 1120; and the logic circuit 1120 is configured to run the code instructions to perform the method performed by the network device in any one of the foregoing embodiments.

The following describes in detail an operation performed when the communication apparatus is used in a network device.

In an optional implementation, the communication apparatus 1100 may be used in the first network device, to perform the method performed by the first network device, specifically, for example, the method performed by the first network device in the embodiment shown in FIG. 6 or FIG. 7.

For example, the input/output interface 1110 is configured to input first request information from the first network device, where the first request information is used to request information about a first cell. The logic circuit 1120 is configured to determine a coverage area of the first cell and/or first configuration information of a second cell different from the first cell. The input/output interface 1110 is further configured to output first response information to the first network device, where the first response information includes the coverage area of the first cell and/or the first configuration information of the second cell different from the first cell.

In another optional implementation, the communication apparatus 1100 may be used in the second network device, to perform the method performed by the second network device. Specifically, for example, the method performed by the second network device in the method embodiment shown in FIG. 6 or FIG. 7.

For example,
the logic circuit 1120 is configured to generate the first request information, where the first request information is used to request the information about the first cell. The input/output interface 1110 is configured to output the first request information to the second network device. The input/output interface 1110 is further configured to input the first response information from the second network device, where the first response information includes the coverage area of the first cell and/or the first configuration information of the second cell different from the first cell.

The communication apparatus 1100 provided in this embodiment may be used in the first network device to perform the method performed by the first network device, or may be used in the second network device to complete the method performed by the second network device. Therefore, for technical effects that can be achieved by this embodiment, refer to the foregoing method embodiments. Details are not described herein again.

According to the foregoing embodiments, an embodiment of this application further provides a communication system. The communication system includes at least one communication apparatus used in the first network device and at least one communication apparatus used in the second network device. Optionally, for a technical effect that can be achieved by the communication system further including at least one communication apparatus used in the terminal device, refer to the foregoing method embodiments. Details are not described herein again.

According to the foregoing embodiments, an embodiment of this application further provides a computer-readable storage medium. The computer-readable storage medium stores a computer program or instructions. When the instructions are executed, the method performed by the network device in any one of the foregoing embodiments is implemented. The computer-readable storage medium may include any medium that can store program code, such as a USB flash drive, a removable hard disk drive, a read-only memory, a random access memory, a magnetic disk, or an optical disc.

To implement the functions of the communication apparatuses in FIG. 8 to FIG. 11, an embodiment of this application further provides a chip, including a processor, configured to support the communication apparatuses in implementing the functions of the network device in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or the instructions may alternatively be stored in a computer-readable memory that can indicate the computer or the another programmable data processing device to operate in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to embodiments of this application without departing from the scope of embodiments of this application. In this case, this application is intended to cover these modifications and variations of embodiments of this application provided that they fall within the scope of protection of the claims of this application and their equivalent technologies.

## Claims

1. An information transmission method, comprising:
receiving first request information from a first network device, wherein the first request information is used to request information about a first cell; and
sending first response information to the first network device, wherein the first response information comprises a coverage area of the first cell and/or first configuration information of a second cell different from the first cell.

2. The method according to claim 1, wherein there is one or more second cells, the first configuration information comprises a coverage area of the second cell and second configuration information of the second cell, and the second configuration information comprises an identifier of the second cell and/or a first message sent to a terminal device.

3. The method according to claim 1 or 2, wherein the coverage area comprises one or two of a height coverage area and a range of a movement path of the terminal device, wherein
the height coverage area indicates signal coverage of a cell signal of the first cell in a direction perpendicular to a horizontal plane or the ground.

4. The method according to any one of claims 1 to 3, wherein the coverage area is indicated in one or more of the following manners:
the indication is performed by using reference point information and distance information, wherein the reference point information indicates a location point or a location range, and the distance information indicates a distance from the location point or the location range;
the indication is performed by using longitude and latitude information; or
the coverage area comprises a movement path point for entering the coverage area and a movement path point for leaving the coverage area, wherein the movement path point indicates a location point in a polarized movement path of the terminal device.

5. The method according to any one of claims 1 to 4, wherein the first response information further comprises first indication information, and the first indication information indicates that the second cell is used for cell handover of the terminal device.

6. The method according to claim 5, wherein the first indication information is the identifier of the second cell or the first indication information is explicit indication information.

7. The method according to any one of claims 1 to 6, wherein the first request information further comprises second indication information, and the second indication information indicates to send the first configuration information of the second cell to the first network device.

8. The method according to claim 7, wherein the second indication information is 1-bit indication information, wherein when a value of the second indication information is 1, it indicates that sending the first configuration information to the first network device is allowed, and when the value of the second indication information is 0, it indicates that sending the first configuration information to the first network device is not allowed; or when a value of the second indication information is 0, it indicates that sending the first configuration information to the first network device is allowed; and when the value of the second indication information is 1, it indicates that sending the first configuration information to the first network device is not allowed.

9. The method according to any one of claims 1 to 8, wherein the first response information further comprises one or two of a horizontal coverage area of the first cell and load information of the first cell, wherein the horizontal coverage area represents signal coverage of the cell signal of the first cell in a direction parallel to the ground, and the load information comprises one or two of load information at a current moment and load information at a historical moment.

10. The method according to any one of claims 1 to 9, further comprising:
sending second request information to a third network device, wherein the second request information is used to request information about a third cell;
receiving second response information from the third network device, wherein the second response information comprises a coverage area of the third cell and/or configuration information of a fourth cell; and
sending the coverage area of the third cell and/or first configuration information of the fourth cell to the first network device.

11. The method according to claim 10, wherein the second response information is generated based on third response information that is sent by a fourth network device and that is received by the third network device, and the third response information is sent based on third request information that is sent by the third network device to the fourth network device and that is used to request information about a fifth cell.

12. An information transmission method, comprising:
sending first request information to a second network device, wherein the first request information is used to request information about a first cell; and
receiving first response information from the second network device, wherein the first response information comprises a coverage area of the first cell and/or first configuration information of a second cell different from the first cell.

13. The method according to claim 12, further comprising:
sending configuration information for conditional handover to a terminal device based on the first response information, wherein the configuration information comprises radio air interface configuration information of a candidate target cell and a handover execution triggering condition, wherein
the handover execution triggering condition comprises a height threshold of the terminal device.

14. The method according to claim 13, wherein the handover execution triggering condition further comprises one or two of time information of the terminal device and location information of the terminal device.

15. The method according to claim 13 or 14, wherein the candidate target cell corresponds to a cell priority, and the cell priority represents a priority of selecting a cell when the terminal device performs cell handover.

16. The method according to claim 12 to 15, wherein there is one or more second cells, the first configuration information comprises a coverage area of the second cell and second configuration information of the second cell, and the second configuration information comprises an identifier of the second cell and/or a first message sent to the terminal device.

17. The method according to claim 12 to 16, wherein the coverage area comprises one or two of a height coverage area and a range of a movement path of the terminal device, wherein
the height coverage area indicates signal coverage of a cell signal of the first cell in a direction perpendicular to a horizontal plane or the ground.

18. The method according to any one of claims 12 to 17, wherein the coverage area is indicated in one or more of the following manners:
the indication is performed by using reference point information and distance information, wherein the reference point information indicates a location point or a location range, and the distance information indicates a distance from the location point or the location range;
the indication is performed by using longitude and latitude information; or
the coverage area comprises a movement path point for entering the coverage area and a movement path point for leaving the coverage area, wherein the movement path point indicates a location in a polarized movement path of the terminal device.

19. The method according to any one of claims 12 to 18, wherein the first response information further comprises first indication information, and the first indication information indicates that the second cell is used for cell handover of the terminal device.

20. The method according to claim 19, wherein the first indication information is the identifier of the second cell or the first indication information is explicit indication information.

21. The method according to any one of claims 12 to 20, wherein the first request information further comprises second indication information, and the second indication information indicates to send the first configuration information of the second cell to the first network device.

22. The method according to claim 21, wherein the second indication information is 1-bit indication information, wherein when a value of the second indication information is 1, it indicates that sending the first configuration information to the first network device is allowed, and when the value of the second indication information is 0, it indicates that sending the first configuration information to the first network device is not allowed; or when a value of the second indication information is 0, it indicates that sending the first configuration information to the first network device is allowed; and when the value of the second indication information is 1, it indicates that sending the first configuration information to the first network device is not allowed.

23. The method according to any one of claims 12 to 22, wherein the first response information further comprises one or two of a horizontal coverage area of the first cell and load information of the first cell, wherein the horizontal coverage area represents signal coverage of the cell signal of the first cell in a direction parallel to the ground, and the load information comprises one or two of load information at a current moment and historical load information.

24. The method according to any one of claims 12 to 23, wherein there is one or more first cells.

25. The method according to any one of claims 12 to 24, further comprising:
sending second request information to a third network device, wherein the second request information is used to request information about a third cell, there is one or more third cells, and there is one or more third network devices.

26. A communication apparatus, comprising a unit configured to perform the method according to any one of claims 1 to 11, or comprising a unit configured to perform the method according to any one of claims 12 to 25.

27. A communication apparatus, comprising a processor and a memory, wherein
the memory is configured to store a computer program or instructions; and
the processor is configured to execute the computer program or the instructions in the memory, to cause the apparatus to perform the method according to any one of claims 1 to 11, or cause the apparatus to perform the method according to any one of claims 12 to 25.

28. A computer-readable storage medium, wherein the computer-readable storage medium stores computer-executable instructions; and when the computer-executable instructions are invoked by an electronic apparatus, the electronic apparatus is caused to perform the method according to any one of claims 1 to 11 or the electronic apparatus is caused to perform the method according to any one of claims 12 to 25.

29. A communication system, comprising an apparatus configured to perform the method according to any one of claims 1 to 11 and an apparatus configured to perform the method according to any one of claims 12 to 25.

30. A chip system, wherein the chip system comprises:
a communication interface; and
a processor, configured to: invoke and run the instructions through the communication interface, to cause a device installed with the chip system to perform the method according to any one of claims 1 to 11, or cause a device installed with the chip system to perform the method according to any one of claims 12 to 25.
